(19) **Europäisches Patentamt / European Patent Office / Office européen des brevets**

(11) **EP 4 317 084 A1**

(12) # EUROPEAN PATENT APPLICATION
published in accordance with Art. 153(4) EPC

(43) Date of publication:
**07.02.2024 Bulletin 2024/06**

(21) Application number: **22780678.3**

(22) Date of filing: **28.03.2022**

(51) International Patent Classification (IPC):
*C02F 1/44* (2023.01)    *B01D 61/02* (2006.01)
*B01D 61/04* (2006.01)    *C02F 1/04* (2023.01)
*C02F 1/52* (2023.01)    *C02F 1/58* (2023.01)
*C02F 5/00* (2023.01)    *C02F 9/02* (2006.01)
*C02F 9/04* (2006.01)    *C02F 9/10* (2006.01)

(52) Cooperative Patent Classification (CPC):
**B01D 61/02; B01D 61/04; C02F 1/04; C02F 1/44;
C02F 1/52; C02F 1/58; C02F 5/00; C02F 9/00**

(86) International application number:
**PCT/JP2022/014808**

(87) International publication number:
**WO 2022/210467 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021057909**

(71) Applicant: **Mitsubishi Heavy Industries, Ltd.
Tokyo 100-8332 (JP)**

(72) Inventors:
- **MATSUKAWA, Kyohei**
  **Tokyo 100-8332 (JP)**
- **ITO, Yoshiaki**
  **Tokyo 100-8332 (JP)**
- **TAKEUCHI, Kazuhisa**
  **Tokyo 100-8332 (JP)**
- **KOBAYASHI, Kazuki**
  **Tokyo 100-8332 (JP)**

(74) Representative: **Studio Torta S.p.A.
Via Viotti, 9
10121 Torino (IT)**

(54) **HIGH-PERFORMANCE PRETREATMENT SYSTEM FOR DESULFURIZED WASTEWATER FOR REVERSE OSMOSIS MEMBRANE**

(57)    A method for treating high hardness water, comprising : adding an alkali metal hydroxide and sodium carbonate to a high hardness water containing calcium and magnesium so that pH of the water is 9.5 to 11.5 to obtain a solid precipitate, removing the precipitate to obtain a precipitate-removed liquid, adding an inorganic acid and an iron-based flocculant to the precipitate-removed liquid so that pH of the liquid is 2.5 to 4.5 to obtain a floc, removing the floc to obtain a floc-removed liquid, subjecting the floc-removed liquid to separation treatment with a reverse osmosis membrane to divide the floc-removed liquid into a permeated water and a concentrated water, and subjecting the concentrated water to evaporation to dryness to obtain a dry solid.

**EP 4 317 084 A1**

FIG. 2

**Description**

TECHNICAL FIELD

The present invention relates to an apparatus and method for treating a high hardness water containing calcium and magnesium, such as a waste water discharged from wet desulphurization. More particularly, the present invention relates to an apparatus and method for treating the high hardness water using a reverse osmosis membrane, which can effectively prevent the reverse osmosis membrane from scaling and fouling, reduce replacement frequency of the reverse osmosis membrane, and reduce those operating cost.

BACKGROUND ART

High hardness water such as waste water discharged from flue gas desulfurization apparatus (hereinafter referred to as "desulfurization wastewater") contains various elements, and the water must be treated so that contents of the elements are not more than the environmental restrictions. As a method for the water treatment, known is a method comprising evaporating desulfurization wastewater to collect a solid content. This method requires a large amount of thermal energy for the evaporation. In order to reduce the thermal energy for the evaporation, it has been proposed to concentrate desulfurization wastewater using a reverse osmosis membrane.

For example, Patent Document 1 discloses a method for treating desulfurization wastewater, characterized in that the method comprises subjecting a desulfurization wastewater to precipitation treatment, concentrating the resulting treated liquid by a reverse osmosis membrane to obtain a clean water and a concentrated water; evaporating the concentrated water using an evaporator to be more concentrated, and drying the concentrated product to obtain a dry solid.

Patent Document 2 discloses a waste liquid treatment method, characterized in that a waste liquid obtained by removing sulfur oxides as gypsum from flue gas is adjusted to at least pH 5.0 or higher and then is treated with a reverse osmosis membrane. Patent Document 2 teaches, in order to prevent calcium sulfate scale, prior to the pH adjustment, an alkali agent such as alkali carbonate, alkali phosphate or caustic alkali may be added, flocculation sedimentation treatment using a flocculant may be subjected, or metal ions such as calcium ions and magnesium ions may be separated and removed with a weakly to strongly acidic ion exchange resin, or a sequestering agent such as Na salt of CMC, Na salt of CMS, or EDTA salt may be added to suppress crystallization of the metal ions. In addition, Patent Document 2 teaches, in order to prevent calcium carbonate scale, after the separation of the metal ions or the crystallization suppression of the metal ions, the pH may be adjusted to 3.5 to 5.0 and then carbonates may be separated with an aeration tower to diffuse carbon dioxide.

Patent document 3 discloses a method for treating wastewater discharged from wet flue gas desulfurization apparatus, characterized in that the method comprises : a reaction step composed of precipitating heavy metals, fluorine, calcium, magnesium and the like as solids by subjecting a wastewater discharged from a wet flue gas desulfurization apparatus to alkali treatment and softening treatment; a first solid-liquid separation step composed of separating the solids produced in the reaction step from the wastewater; a second solid-liquid separation step composed of adjusting a pH of the wastewater treated in the first solid-liquid separation step to separate fine solids contained in the wastewater with a microfiltration membrane; and a salt separation step composed of separating salts dissolved in the wastewater treated in the second solid-liquid separation step using a reverse osmosis membrane, wherein a water recovered in the salt separation step is recycled to the wet flue gas desulfurization apparatus to be reused.

Patent document 4 discloses a method for treating wastewater containing calcium and sulfuric acid, comprising : adding sodium carbonate to a wastewater containing calcium and sulfuric acid to be treated to crystallize the calcium contained in the wastewater into calcium carbonate, concentrating the resulting wastewater by boiling evaporation with indirect heating while still containing the crystalized calcium carbonate, and solidifying the boiled and evaporated concentrated wastewater by drying while containing the crystalized calcium carbonate, characterized in that the method further comprises feeding the wastewater containing calcium and sulfuric acid to be treated before the addition of the sodium carbonate to a reverse osmosis membrane module using a reverse osmosis membrane to divide into a permeated water and a non-permeated water, and supplying the non-permeated water to an addition point of the sodium carbonate.

PRIOR ART LITERATURES

PATENT LITERATURES

    Patent Document 1 : JP H10-85742 A
    Patent Document 2 : JP S51-93789 A

Patent Document 3 : JP H10-137540 A
Patent Document 4 : JP 2006-305541 A

SUMMARY OF THE INVENTION

PROBLEMS TO BE RESOLVED BY THE INVENTION

An object of the present invention is to provide an apparatus and method for treating a high hardness water containing calcium and magnesium, such as a water discharged from desulphurization, using a reverse osmosis membrane, which can effectively prevent the reverse osmosis membrane from scale and fouling, reduce replacement frequency of the reverse osmosis membrane, and reduce those operating cost.

MEANS FOR SOLVING THE PROBLEMS

In order to solve the above problems, the present invention including the following embodiments has been completed.

[1] A method for treating high hardness water, comprising :

adding an alkali metal carbonate and an alkali metal hydroxide or water-soluble alkaline earth metal hydroxide to a high hardness water containing calcium and magnesium so that pH of the high hardness water is 9.5 to 11.5, to obtain a solid precipitate,
removing the precipitate to obtain a precipitate-removed liquid,
adding an inorganic acid and an iron-based flocculant to the precipitate-removed liquid so that pH of the precipitate-removed liquid is 2.5 to 4.5 to obtain a floc,
removing the floc to obtain a floc-removed liquid, subjecting the floc-removed liquid to separation treatment with a reverse osmosis membrane to divide the floc-removed liquid into a permeated water and a concentrated water, and
subjecting the concentrated water to evaporation to dryness to obtain a dry solid.

[2] The method according to [1], further comprising adding an alkali metal hydroxide to the floc-removed liquid so that pH of the floc-removed liquid is 6.5 to 7.5 to obtain an additional floc, and removing the additional floc to obtain an additional floc-removed liquid, wherein the additional floc-removed liquid is subjected to the separation treatment with the reverse osmosis membrane.

[3] A apparatus for treating high hardness water, comprising :

a reaction crystallization device having a feature for facilitating to add an alkali metal carbonate and an alkali metal hydroxide or water-soluble alkaline earth metal hydroxide to a high hardness water containing calcium and magnesium so that pH of the high hardness water is 9.5 to 11.5 to obtain a precipitate and a feature for facilitating to remove the precipitate to obtain a precipitate-removed liquid;
a first flocculation sedimentation device having a feature for facilitating to add an inorganic acid and an iron-based flocculant to the precipitate-removed liquid so that pH of the precipitate-removed liquid is 2.5 to 4.5 to obtain a floc, and a feature for facilitating to remove the floc to obtain a floc-removed liquid;
a reverse osmosis membrane device having a reverse osmosis membrane for facilitating to divide the floc-removed liquid into a permeated water and a concentrated water, and
an evaporation to dryness device having a feature for facilitating to evaporate a liquid from the concentrated water to obtain a dry solid.

[4] The apparatus according to [3], further comprising a second flocculation sedimentation device having a feature for facilitating to add an alkali metal hydroxide to the floc-removed liquid so that pH of the floc-removed liquid is 6.5 to 7.5 to obtain an additional floc, and a feature for facilitating to remove the additional floc.

ADVANTAGEOUS EFFECTS OF THE INVENTION

The treatment apparatus and treatment method of the present invention can effectively prevent the reverse osmosis membrane from scale and fouling, reduce replacement frequency of the reverse osmosis membrane, and reduce those operating cost.

BRIEF DESCRIPTION OF THE DRAWINGS

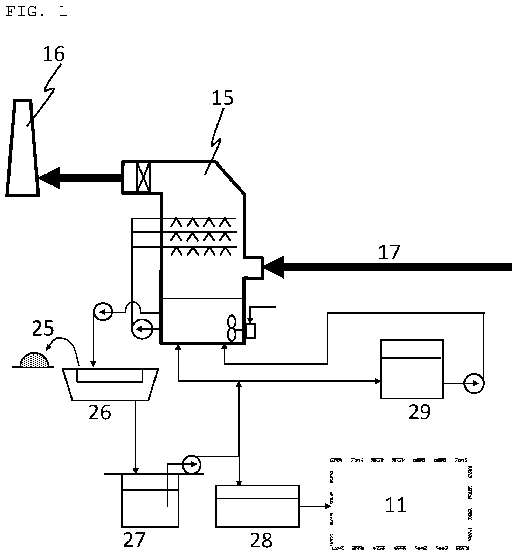

[FIG. 1] is a figure which shows an example of a wet desulfurization apparatus.

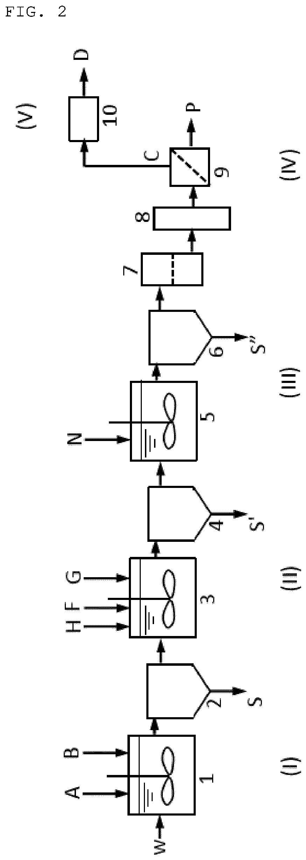

[FIG. 2] is a figure which shows an example of the apparatus for treating high hardness water according to the present invention.

EMBODIMENTS FOR CARRYING OUT THE INVENTION

A method for treating high hardness water in the present invention comprises a reaction crystallization step, a first flocculation sedimentation step, a membrane separation step, an evaporation-to-dryness step, and optionally a second flocculation sedimentation step. An apparatus for treatment of high hardness water in the present invention comprises a reaction crystallization device, a first flocculation sedimentation device, a reverse osmosis membrane device, an evaporation-to-dryness device, and, optionally, a second flocculation sedimentation device. The high hardness water treatment apparatus in the present invention comprises flow paths between the above devices, and each of the flow paths is configured to flow a liquid to be treated in the order of the reaction crystallization device, the first flocculation sedimentation device, the second flocculation sedimentation device as necessary, and the reverse osmosis membrane device. The high hardness water treatment apparatus further comprises a flow path configured to supply a concentrated water from the reverse osmosis membrane device to the evaporation to dryness device.

As the high hardness water containing calcium and magnesium, mentioned can be desulfurization wastewater, seawater, cooling tower blow effluent, landfill leachate, groundwater, or mine effluent. From the viewpoint of a large treatment amount, the present invention is preferably applied to desulfurization wastewater. The high hardness water applied to the present invention has a water hardness of usually 60 mg/l or more, preferably 180 mg/l or more, more preferably 357 mg/l or more, still more preferably 1000 mg/l or more, and even more preferably 3000 mg/l or more, most preferably 5000 mg/l or more. The water hardness is obtained by converting a calcium amount and a magnesium amount into a calcium carbonate ($CaCO_3$) amount, and can be calculated by the following formula.

$$\text{Water Hardness [mg/l]} = (\text{calcium amount [mg/l]} \times 2.5) + (\text{magnesium amount [mg/l]} \times 4.1)$$

Flue gas desulfurization is performed by passing flue gas through a wet flue gas desulfurization apparatus. As typical examples of a method for the wet flue gas desulfurization, mentioned can be lime-gypsum method, magnesium hydroxide method, soda method and the others. The wet flue gas desulfurization apparatus used in the present invention comprises a gas absorbing device 15 capable of contacting flue gas with a water slurry containing limestone ($CaCO_3$), slaked lime ($Ca(OH)_2$), quicklime ($CaO$) or the like and further comprises a device 26 for separating and removing gypsum. The gas absorbing device can be a packed tower, a wet wall tower, a spray tower, or the like. With the gas absorbing device, sulfur oxides in the flue gas react with limestone, slaked lime or quicklime contained in the water slurry to generate calcium sulfite, and the calcium sulfite is oxidized to obtain calcium sulfate (gypsum). The gypsum is separated and removed from a gypsum slurry (a water slurry containing calcium) discharged from the gas absorbing device with the device for separating and removing gypsum. A gypsum removed colature (an aqueous solution containing calcium) is produced by the separation and removal of the gypsum.

Solidification of calcium, magnesium, silica, etc. contained in high hardness water such as desulfurization wastewater creates scale. In addition, in desulfurization apparatus, etc., cyclic usage or the like of water often leads to high COD and high BOD in high hardness water. Therefore, fouling is likely to occur in the reverse osmosis membrane.

The reaction crystallization step is composed of adding an alkali metal carbonate B and an alkali metal hydroxide or water-soluble alkaline earth metal hydroxide A to a high hardness water to obtain a solid precipitate S and removing the solid precipitate. The reaction crystallization device I configured to facilitate the reaction crystallization step comprises a reaction vessel 1, a solid-liquid separation device (for example, a sedimentation vessel 2), a flow path for supplying an alkali metal hydroxide or water-soluble alkaline earth metal hydroxide A to the reaction vessel 1, a flow path for supplying an alkali metal carbonate B to the reaction vessel 1, a flow path for supplying a high hardness water to the reaction vessel 1, a flow path for transferring a liquid from the reaction vessel 1 to the solid-liquid separation device, and a flow path for discharging a liquid from the solid-liquid separation device.

Examples of the alkali metal hydroxide can include sodium hydroxide, potassium hydroxide or the like. Among these, sodium hydroxide is preferred.

Examples of the water-soluble alkaline earth metal hydroxide can include calcium hydroxide, strontium hydroxide or the like. Among these, calcium hydroxide is preferred.

Examples of the alkali metal carbonate can include sodium carbonate, potassium carbonate and the like. Among these, sodium carbonate is preferred.

The alkali metal carbonate B, and the alkali metal hydroxide or water-soluble alkaline earth metal hydroxide A can be added in the form of powder, granules, flakes, or an aqueous solution.

The addition of the alkali metal hydroxide or water-soluble alkaline earth metal hydroxide and the alkali metal carbonate is carried out in such an amount that the high hardness water will have a pH of 9.5 to 11.5.

The alkali metal hydroxide or water-soluble alkaline earth metal hydroxide A and the alkali metal carbonate B may be added simultaneously or sequentially. The sequential order of addition of the alkali metal hydroxide or water-soluble alkaline earth metal hydroxide A and the alkali metal carbonate B is not particularly limited, and either one may be added first.

The addition of the alkali metal hydroxide or water-soluble alkaline earth metal hydroxide mainly causes magnesium contained in the high hardness water to be precipitated as magnesium hydroxide. Furthermore, precipitation of heavy metals, Si, Al or the like contained in the high hardness water is induced. On the other hand, the addition of the alkali metal carbonate mainly causes calcium contained in the high hardness water to be precipitated as calcium carbonate. As a temperature of the solution is higher, the solubility of calcium carbonate or magnesium hydroxide is lower to make them easier to precipitate. On the other hand, when the temperature of the solution is high, convection tends to occur due to the influence of the surrounding environment, and the efficiency of gravity solid-liquid separation may decrease.

The solid precipitate is removed by a solid-liquid separation device. As the solid-liquid separation device, mentioned can be decantation equipment (overflow type decantation equipment, skimming type decantation equipment, etc.), filter cloth bag, screw press, roller press, rotary drum screen, belt screen, vibration screen, multi-plate wave filter, vacuum dewatering equipment, pressure dewatering equipment, belt press, cyclone-type solid-liquid separator (liquid cyclone), centrifugal concentration dehydrator, multi-disk dehydrator, or the like. A part of the removed precipitate may be returned to the reaction vessel 1 for use as seed crystal. The addition of seed crystal can increase a size of the solid precipitate to facilitate the solid-liquid separation. A slurry of the solid precipitate obtained by the solid-liquid separation can be subjected to evaporation to dryness together with the concentrated water.

In many cases, fine particles (soot dust, gypsum, the aforementioned precipitates, etc.), which could not be removed in the reaction crystallization step, are suspended in the liquid from which the solid precipitate has been removed. In addition, it may contain some compounds that are highly soluble under high pH. Therefore, the first flocculation sedimentation step is performed.

In the first flocculation sedimentation step, an inorganic acid H and an iron-based flocculant F are added to the liquid from which the precipitate has been removed to obtain first flocs S', and the first flocs S' are removed. The first flocculation sedimentation device II for facilitating a progress of the first flocculation sedimentation step comprises a reaction vessel 3, a solid-liquid separation device (for example, a sedimentation vessel 4), a flow path for supplying the inorganic acid to the reaction vessel 3, a flow path for supplying the iron-based flocculant to the reaction vessel 3, a flow path for supplying the liquid from which the precipitate has been removed to the reaction vessel 3, a flow path for transferring the liquid from the reaction vessel 3 to the solid-liquid separation device and a flow path for discharging the liquid from the solid-liquid separation device. In the apparatus in which the reaction vessel 3 and the solid-liquid separation device are integrated, the flow path for transferring the liquid from the reaction vessel 3 to the solid-liquid separation device can be omitted. In addition, since the first flocs generated in the first flocculation sedimentation step can be removed together with second flocs by a solid-liquid separation device in the following second flocculation sedimentation step, the solid-liquid separation device (for example, sedimentation vessel 4) to be provided in the first flocculation sedimentation device may be omitted.

Examples of the inorganic acid can include hydrochloric acid, nitric acid, sulfuric acid, phosphoric acid or the like. Among these, hydrochloric acid is preferred. Examples of the iron-based flocculant can include ferric chloride, polyferric sulfate, polysilica iron or the like. Among these, ferric chloride is preferred. The inorganic acid H and iron-based flocculant F can be added in the form of powder, granules, flakes, dispersion or aqueous solution.

The inorganic acid and the iron-based flocculant are added in such amounts that pH of the liquid becomes 2.5 to 4.5. The inorganic acid and the iron-based flocculant may be added simultaneously or sequentially. The sequential order of the additions of the inorganic acid and the iron-based flocculant is not particularly limited, and either may be added first, but it is preferable to add the inorganic acid first from the viewpoint of flocculating precipitates under acidic conditions. This causes fine particles to be flocculated and form the first flocs. The first flocs are removed by the solid-liquid separation device. As the solid-liquid separation device, mentioned can be the same devices as described above. A part of the removed first flocs may be returned to the reaction vessel 3 for use as seed crystals. The liquid from which the first flocs have been removed can be sent to the membrane separation step for use as raw water.

In the first flocculation sedimentation step, as needed, a polymer coagulant G may be added to the liquid from which the precipitate has been removed. Examples of the polymer coagulant can include an anionic polymer coagulant, a nonionic polymer coagulant, a cationic polymer coagulant, and an amphoteric polymer coagulant. The polymer coagulant G can be added in the form of powder, granules, flakes, dispersion or aqueous solution. The addition of the polymer coagulant may facilitate coarsening of the first flocs.

The liquid from which the first flocs have been removed may contain compounds that are highly soluble at low pH. In addition, fine particles that could not be removed in the first flocculation sedimentation step may be floating. In such cases, the second flocculation sedimentation step (IV) may be performed.

In the second flocculation sedimentation step, an alkali metal hydroxide N is added to the liquid from which the first flocs have been removed to obtain the second flocs S" and the second flocs S" are removed. The second flocculation sedimentation device III for facilitating a progress of the second flocculation sedimentation step comprises a reaction vessel 5 and the solid-liquid separation device (eg, sedimentation vessel 6), further comprises a flow path for supplying the alkali metal hydroxide to the reaction vessel 5, a flow path for supplying the liquid from which the first flocs have been removed to the reaction vessel 5, and a flow path for transferring a liquid from the reaction vessel 5 to the solid-liquid separation device, and a flow path for discharging a liquid from the solid-liquid separation device. In the apparatus in which the reaction vessel 5 and the solid-liquid separation device are integrated, the flow path for transferring the liquid from the reaction vessel to the solid-liquid separation device can be omitted.

Examples of the alkali metal hydroxide N to be used in the second flocculation sedimentation step can include sodium hydroxide, potassium hydroxide and the like. Among these, sodium hydroxide is preferred. The alkali metal hydroxide N can be added in the form of powder, granules, flakes, or an aqueous solution. Addition of the alkali metal hydroxide is carried out in such an amount that a pH of the liquid becomes 6.5 to 7.5. This causes fine particles to be flocculated and to form the second flocs. The second flocs are removed by the solid-liquid separation device. As the solid-liquid separation device, mentioned can be the same device as described above. A part of the removed second flocs may be returned to the reaction vessel 5 as seed crystals.

In the present invention, in order to remove the second flocs, instead of or in conjunction with the solid-liquid separation device (e.g., sedimentation vessel 6) in the second flocculation sedimentation step, filtration using a multilayer filtration membrane, an ultrafiltration membrane, filter sand 7, or the like may be performed for the solid-liquid separation. This may suppress fouling of the reverse osmosis membrane. Backwash can be carried out when the filtration becomes inefficient. Waste water from the backwash can be solid-liquid separated in a sedimentation vessel as necessary, and the supernatant water can be sent to the first flocculation sedimentation step. Slurry containing solids from the backwash can be evaporated to dryness together with the concentrated water. The liquid from which the second flocs have been removed can be sent to the membrane separation step as the raw water.

Next, the membrane separation step is performed. In the membrane separation step, the raw water, which is the liquid from which the first floc has been removed or the liquid from which the second floc has been removed, is subjected to separation using a reverse osmosis membrane 9 to be divided into permeated water P and concentrated water C. The reverse osmosis membrane device IV, which facilitates a progress of the membrane separation step, comprises a reverse osmosis membrane a raw water pressure device or a permeated water suction device, a flow path for supplying the raw water to the reverse osmosis membrane, a flow path for discharging the concentrated water from the reverse osmosis membrane; and a flow path for discharging the permeated water from the reverse osmosis membrane.

As the water temperature decreases, an amount of the water permeated through the reverse osmosis membrane decreases and the differential pressure required to obtain the same amount of the water increases. Conversely, as the water temperature increases, the amount of the permeated water increases and a blocking ratio of salts decreases. Therefore, the temperature of the liquid is preferably adjusted to 0°C or higher and 85°C or lower, more preferably 0°C or higher and 45°C or lower, and even more preferably 5°C or higher and 35°C or lower during performing the reverse osmosis membrane separation. In order to adjust the temperature of the liquid, a temperature control device such as cooler, cooling tower 8, heater or the like can be installed anywhere, for example, in a place between the second flocculation sedimentation device and the reverse osmosis membrane device.

Examples of the reverse osmosis membrane can include a membrane made of cellulose acetate, a membrane made of aromatic polyamide, a membrane made of polyvinyl alcohol, a membrane made of polysulfone or the others. The reverse osmosis membrane is not limited by its configuration, and examples thereof can include a hollow fiber membrane, a spiral membrane, a tubular membrane, or the like.

The reverse osmosis membrane is preferably built into the membrane module. A case-housing type module comprises a membrane element stored in a casing, and the membrane element comprising a reverse osmosis membrane, a support body for the membrane and a channel member, wherein the reverse osmosis membrane, the support body and the channel member are integrated. As the case-housing type module, mentioned can be a pleat type module, a spiral type module, a monolith type module, a tube type module, a hollow fiber type module or the like.

Reverse osmosis membrane is impermeable to cations such as calcium ion ($Ca^{2+}$), sodium ion ($Na^+$), potassium ion ($K^+$), or iron ion ($Fe^{3+}$); anions such as sulfate ions ($SO_4^{2-}$), or chloride ion (Cl-) ; and lead (Pb), mercury (Hg), cadmium (Cd), arsenic (As), and the like. The water permeated through the reverse osmosis membrane (permeated water) is one from which almost all contaminants contained in the high hardness water have been removed. The permeated water can be subjected to sterilization treatment, final filtering, ion exchange treatment, or the like, as necessary, to make water conform to desired water quality standard. The permeated water can be reused in the wet flue gas desulfurization or the like.

The concentrated water is evaporated to dryness to make a dry solid D. For the evaporation to dryness, a known evaporation to dryness apparatus V such as the evaporation/dryer 10 can be used. The evaporated water can be condensed and reused in the wet flue gas desulfurization or the like. As necessary, valuable components can be separated and recovered from the dry solid, and the residue after the recover can be disposed of.

In the high hardness water treatment apparatus of the present invention, the structure, shape, arrangement, etc. can be changed within the scope of the present invention. It is also possible to add the conventional members, mechanisms or the like used in the prior art. It can be understood that aspects with such modifications or additions belong to the technical scope of the present invention.

The effects of the present invention will be shown by examples and comparative example.

(Evaluation method)

The following measurements were performed with reference to the measurement method described in ASTM D4189, JIS K 3802, or JP 2012-213676 A.

Using a membrane filter (new product) having a pore size of 0.45 $\mu$m, -67 kPa suction filtration was performed on 500 ml of clarified water (for example, the water permeated through the reverse osmosis membrane). The time $T_0$ required for the suction filtration was measured.

Using the membrane filter which had been used in the measurement of time $T_0$, -67 kPa suction filtration was performed on 500 ml of test liquid (the raw water). The time $T_1$ required for the suction filtration was measured.

Using the membrane filter which had been used in the measurement of time $T_1$, -67 kPa suction filtration was performed on 500 ml of test liquid (the raw water) . The time $T_2$ required for the suction filtration was measured.

A ratio $T_1/T_0$ is an index of contamination degree of the test liquid (the raw water) by the water-soluble polymer. · A ratio $T_2/T_1$ is an index of contamination degree of the test liquid (the raw water) by fine particles. These ratios indicate that the lower the values are, the less likely fouling and scale occur in the reverse osmosis membrane by the raw water.

EXAMPLE 1

Sodium hydroxide and sodium carbonate were added to a high hardness water ($Ca^{2+}$ = about 5400 mg/l, $Mg^{2+}$ = about 400 mg/l, $SO_4^-$ = about 900 mg/l, at room temperature [JIS Z 8703]) to adjust the pH to 10.5. The precipitate was removed by the decantation method.

To the liquid from which the precipitate had been removed, hydrochloric acid was added to adjust the pH to 7 and then an iron-based flocculant (mainly composed of ferric chloride) was added to adjust the pH to 3. The generated flocs were removed by the decantation method (first floc removal).

Next, to the liquid from which the flocs had been removed, sodium hydroxide was added to adjust the pH to 7. The generated flocs were removed by the decantation method (second floc removal).

The liquid obtained by the second floc removal had a ratio $T_1/T_0$ of 1.04 and a ratio of $T_2/T_1$ of 1.03. It can be assumed that the liquid obtained by the second floc removal (the raw water) is unlikely to cause fouling or scale when subjected to a reverse osmosis membrane separation.

COMPARATIVE EXAMPLE 1

Sodium hydroxide and sodium carbonate were added to a high hardness water ($Ca^{2+}$ = about 5400 mg/l, $Mg^{2+}$ = about 400 mg/l, $SO_4^-$ = about 900 mg/l, at room temperature [JIS Z 8703]) to adjust the pH to 10.5. The precipitate was removed by the decantation method.

To the liquid from which the precipitate had been removed, an iron-based flocculant (mainly composed of ferric chloride) was added to adjust the pH to 9. The generated flocs were removed by the decantation method (first floc removal).

Next, to the liquid from which the flocs had been removed, hydrochloric acid was added to adjust the pH to 7. The generated flocs were removed by the decantation method (second floc removal).

The liquid obtained by the second floc removal had a ratio $T_1/T_0$ of 3.28 and a ratio of $T_2/T_1$ of 1.19. It can be assumed that the liquid obtained by the second floc removal (the raw water) is likely to cause fouling or scale when subjected to a reverse osmosis membrane separation.

EXAMPLE 2

A dry solid was obtained in the same manner as in Example 1, except that polymer flocculant was added at the same time as the addition of the iron-based flocculant. There was no change in pH due to the addition of the polymer flocculant. The ratio $T_1/T_0$ was 1.03. The ratio $T_2/T_1$ was 1.03.

From the above results, it can be seen that the present invention can effectively prevent scale and fouling of reverse osmosis membranes. As the result, it can be seen that the replacement frequency of the reverse osmosis membrane can be reduced and the operating cost can be reduced.

CODE LIST

1 : Reaction vessel for use reaction crystallization step
2 : Sedimentation vessel for use reaction crystallization step
3 : Reaction vessel for use first flocculation sedimentation step
4 : Sedimentation vessel for use first flocculation sedimentation step
5 : Reaction vessel for use second flocculation sedimentation step
6 : Sedimentation vessel for use second flocculation sedimentation step
7 : Filter
8 : Cooling tower
9 : Reverse osmosis membrane
10 : Evaporator/Dryer
11 : Apparatus for treatment of water having high water hardness

I : Device for reaction crystallization
II : First flocculation sedimentation device
III : Second flocculation sedimentation device
IV : Reverse osmosis membrane device
V : Evaporation to dryness device

W : High hardness water
A : Alkali metal hydroxide or water-soluble alkaline earth metal hydroxide
B : Alkali metal carbonate
H : Inorganic acid
F : Iron-based flocculant
G : Polymer coagulant
N : Alkali metal hydroxide
P : Permeated water
C : Concentrated water
D : Dry solid
S : Precipitate
S' : First flocs
S" : Second flocs
15 : Wet flue gas desulfurization apparatus (gas absorption apparatus)
16 : Chimney
17 : Gas flue
25 : Gypsum
26 : Gypsum separator (dehydrator)
27 : Gypsum dewatering filtrate vessel
28 : Desulfurization waste water vessel
29 : Calcium carbonate slurry preparation vessel

**Claims**

1. A method for treatment of high hardness water, comprising :

   adding an alkali metal carbonate and an alkali metal hydroxide or water-soluble alkaline earth metal hydroxide to a high hardness water containing calcium and magnesium so that pH of the high hardness water is 9.5 to 11.5, to obtain a precipitate,

removing the precipitate to obtain a precipitate-removed liquid,

adding an inorganic acid and an iron-based flocculant to the precipitate-removed liquid so that pH of the precipitate-removed liquid is 2.5 to 4.5 to obtain a floc,

removing the floc to obtain a floc-removed liquid, subjecting the floc-removed liquid to separation treatment with a reverse osmosis membrane to divide the floc-removed liquid into a permeated water and a concentrated water, and

subjecting the concentrated water to evaporation to dryness to obtain a dry solid.

2. The method according to claim 1, further comprising adding an alkali metal hydroxide to the floc-removed liquid so that pH of the floc-removed liquid is 6.5 to 7.5 to obtain an additional floc, and removing the additional floc to obtain an additional floc-removed liquid, wherein the additional floc-removed liquid is subjected to the separation treatment with the reverse osmosis membrane.

3. A apparatus for treating high hardness water, comprising :

a reaction crystallization device having a feature for facilitating to add an alkali metal carbonate and an alkali metal hydroxide or water-soluble alkaline earth metal hydroxide to a high hardness water containing calcium and magnesium so that pH of the high hardness water is 9.5 to 11.5 to obtain a precipitate and a feature for facilitating to remove the precipitate to obtain a precipitate-removed liquid;

a first flocculation sedimentation device having a feature for facilitating to add an inorganic acid and an iron-based flocculant to the precipitate-removed liquid so that pH of the precipitate-removed liquid is 2.5 to 4.5 to obtain a floc, and a feature for facilitating to remove the floc to obtain a floc-removed liquid;

a reverse osmosis membrane device having a reverse osmosis membrane for facilitating to divide the floc-removed liquid into a permeated water and a concentrated water, and

an evaporation to dryness device having a feature for facilitating to evaporate a liquid from the concentrated water to obtain a dry solid.

4. The apparatus according to claim 3, further comprising a second flocculation sedimentation device having a feature for facilitating to add an alkali metal hydroxide to the floc-removed liquid so that pH of the floc-removed liquid is 6.5 to 7.5 to obtain an additional floc, and a feature for facilitating to remove the additional floc.

FIG. 1

FIG. 2

<div align="center">

**INTERNATIONAL SEARCH REPORT**

</div>

| | International application No. |
|---|---|
| | **PCT/JP2022/014808** |

| **A.** | **CLASSIFICATION OF SUBJECT MATTER** |
|---|---|

*C02F 1/44*(2006.01)i; *B01D 61/02*(2006.01)i; *B01D 61/04*(2006.01)i; *C02F 1/04*(2006.01)i; *C02F 1/52*(2006.01)i; *C02F 1/58*(2006.01)i; *C02F 5/00*(2006.01)i; *C02F 9/02*(2006.01)i; *C02F 9/04*(2006.01)i; *C02F 9/10*(2006.01)i
FI:    C02F1/44 E; B01D61/02 500; B01D61/04; C02F1/04 C; C02F1/52 K; C02F1/58 J; C02F5/00 610E; C02F5/00 610F; C02F5/00 620B; C02F5/00 620C; C02F9/02; C02F9/04; C02F9/10

According to International Patent Classification (IPC) or to both national classification and IPC

| **B.** | **FIELDS SEARCHED** |
|---|---|

Minimum documentation searched (classification system followed by classification symbols)

C02F1/02-18, 52-64, 5/00-14, 9/00-14, B01D21/01, 61/00-71/82

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | JP 2015-128754 A (MITSUBISHI HEAVY IND., LTD.) 16 July 2015 (2015-07-16) paragraphs [0063]-[0131], fig. 12 | 1, 3 |
| A | | 2, 4 |
| Y | JP 10-137540 A (MITSUI MINING CO., LTD.) 26 May 1998 (1998-05-26) paragraphs [0006], [0021], [0022], [0037], fig. 1 | 1, 3 |
| Y | JP 2003-170174 A (KURITA WATER IND. LTD.) 17 June 2003 (2003-06-17) paragraphs [0023], [0035] | 1, 3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/014808**

| Patent document cited in search report | | | Publication date (day/month/year) | Patent family member(s) | Publication date (day/month/year) |
|---|---|---|---|---|---|
| JP | 2015-128754 | A | 16 July 2015 | (Family: none) | |
| JP | 10-137540 | A | 26 May 1998 | (Family: none) | |
| JP | 2003-170174 | A | 17 June 2003 | (Family: none) | |

Form PCT/ISA/210 (patent family annex) (January 2015)

**EP 4 317 084 A1**

**REFERENCES CITED IN THE DESCRIPTION**

**Patent documents cited in the description**

- JP H1085742 A
- JP S5193789 A
- JP H10137540 A
- JP 2006305541 A
- JP 2012213676 A